(19) Europäisches Patentamt
European Patent Office
Office européen des brevets

(11) **EP 3 677 447 B1**

(12) **EUROPEAN PATENT SPECIFICATION**

(45) Date of publication and mention
of the grant of the patent:
**13.07.2022 Bulletin 2022/28**

(21) Application number: **18855238.4**

(22) Date of filing: **10.09.2018**

(51) International Patent Classification (IPC):
**B60C 19/00** (2006.01)    **B60C 15/06** (2006.01)
**B60C 13/00** (2006.01)

(52) Cooperative Patent Classification (CPC):
**B60C 19/00;** B60C 2013/006; B60C 2015/0614

(86) International application number:
**PCT/JP2018/033374**

(87) International publication number:
**WO 2019/054316 (21.03.2019 Gazette 2019/12)**

(54) **PNEUMATIC TIRE**

LUFTREIFEN

PNEU

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **12.09.2017 JP 2017175253**

(43) Date of publication of application:
**08.07.2020 Bulletin 2020/28**

(73) Proprietor: **Sumitomo Rubber Industries, Ltd.
Kobe-shi, Hyogo 651-0072 (JP)**

(72) Inventors:
• **YOSHIZUMI Takuma
  Kobe-shi
  Hyogo 651-0072 (JP)**

• **NAKAJIMA Hiroki
  Kobe-shi
  Hyogo 651-0072 (JP)**

(74) Representative: **Manitz Finsterwald
Patent- und Rechtsanwaltspartnerschaft mbB
Martin-Greif-Strasse 1
80336 München (DE)**

(56) References cited:
**WO-A1-2016/021327      WO-A1-2016/021327
JP-A- 2007 230 261       JP-A- 2008 265 750
JP-A- 2013 514 230       JP-A- 2016 037 236
JP-A- 2016 539 047       JP-A- 2016 539 047**

**Description**

**TECHNICAL FIELD**

The present invention relates to a pneumatic tire in which an electronic component such as RFID is provided.

**BACKGROUND ART**

In recent years, in order to monitor various data such as the internal pressure, temperature and rotational speed of pneumatic tires (hereinafter, also simply referred to as "tires") to improve safety, maintainability, etc. while the vehicle is traveling, it has been proposed that an electronic component such as transponder for RFID (Radio Frequency Identification) (hereinafter, also simply referred to as "RFID") for recording the above various data is to be provided to a tire.
The transponder is a small, lightweight electronic component consisting of a semiconductor chip with a transmitter/receiver circuit, a control circuit, a memory, etc., and an antenna. As the transponder, battery-less one is often used which can transmit the various data in the memory as response radio waves when it receives an inquiry radio wave, which is used as electrical energy.
As a method of providing such an electronic component to a tire, a method has been proposed in which the electronic component is adhered to the surface of the tire after vulcanization by adhesion or the like (for example, Patent Document 1). However, when this method is adopted, there is a problem that the electronic component easily falls-off while traveling on the road surface, although there is little risk that the electronic component will be destroyed.
Then, in order to prevent falling-off of electronic component, a method has been proposed in which the electronic component is integrated with a tire by vulcanization adhesion accompanying vulcanization molding after molding the green tire while embedding the electronic component inside (for example, Patent Document 2). Patent Documents 3 and 4 disclose other tires with electronic components.

PRIOR ART DOCUMENTS

PATENT DOCUMENTS

[Patent document 1] JP2006-168473 A
[Patent document 2] JP2008-265750 A
[Patent document 3] WO 2016/021327 A1
[Patent document 4] JP2016-539047 A

SUMMARY OF INVENTION

PROBLEM TO BE SOLVED BY THE INVENTION

However, when the method of integrating the electronic components into an unvulcanized tire is adopted, there is a risk that the electronic component is damaged or deformed by impact load or the like while traveling on the road surface and sufficient reading performance cannot be obtained, although there is no risk that the electronic component may fall-off.
Therefore, an object of the present invention is to provide a manufacturing technology for tire which can suppress damage and deformation of the electrical component due to impact load or the like while traveling on the road surface and maintain sufficient reading performance, even when the tire has an electronic component provided therein.

**MEANS FOR SOLVING THE PROBLEM**

The inventors of the present invention have earnestly studied for solving the above problems, found that the problems can be solved by the invention described below, and completed the present invention.
The invention is defined in claim 1. Preferred features are defined in the dependent claims.

**EFFECT OF THE INVENTION**

According to the present invention, a manufacturing technology for tire is provided which can manufacture a tire capable of suppressing the damage and deformation of the electrical component due to impact load or the like during traveling on the road surface and maintaining sufficient reading performance, even when an electronic component is provided in the tire.

## BRIEF DESCRIPTION OF DRAWINGS

[Figure 1] This figure is a cross-sectional view showing the configuration of a pneumatic tire according to an embodiment of the present invention.
[Figure 2] It is a figure explaining the communication measurement points in an example of present invention.

## EMBODIMENT FOR CARRYING OUT THE INVENTION

Hereinafter, the present invention will be described based on embodiments.

[1] Background of the Present Invention

As a result of studies for solving the above-mentioned problems, the present inventors have considered that the damage and deformation of electronic component due to impact load and the like when traveling on the road surface can be suppressed when the rubber member for tire located outward in the tire axial direction from the position where the electronic component provided is harden.

It is important that the electronic component provided in a tire should not be damaged no matter how it is used. For example, it is important not to be damaged even if the air pressure is low or even when high speed and severe handling is conducted. Specifically, for example, when the air pressure becomes 70 to 90% of the specified value, deformation becomes larger even in the normal driving and the vicinity of the electronic component will reach 70 to 100°C. Furthermore, if high speed and severe handling is conducted in such a state, it may reach up to 150°C.

For this reason, it is necessary to design so that the electronic component will not be damaged even when such a sudden temperature change and the deformation of the tire accompanying it occur. Therefore, it is important to appropriately control the relationship between E*(100°C) at 100°C and E*(150°C) at 150°C.

As a result of earnest studies, it has been found that the occurrence of damage and deformation of the electronic component is sufficiently suppressed and the reading performance of the electronic component can be maintained even when high-speed and severe handling, if E*(100°C) at 100°C and E*(150°C) at 150°C of the tire rubber member having the largest E*(100°C) at 100°C among the tire rubber member located outward in the tire axial direction from the position where the electronic component is disposed satisfy the following formula.

$$\mathrm{E^*(150°C) \: / \: E^*(100°C) \geqq 0.9}$$

Further, it is found that the right side of above formula is more preferably 1.0 or more and further preferably 1.3 or more. Thus, the present invention has been completed.

[2] Embodiment of the present invention

1. Tire Configuration

(1) Overall Configuration

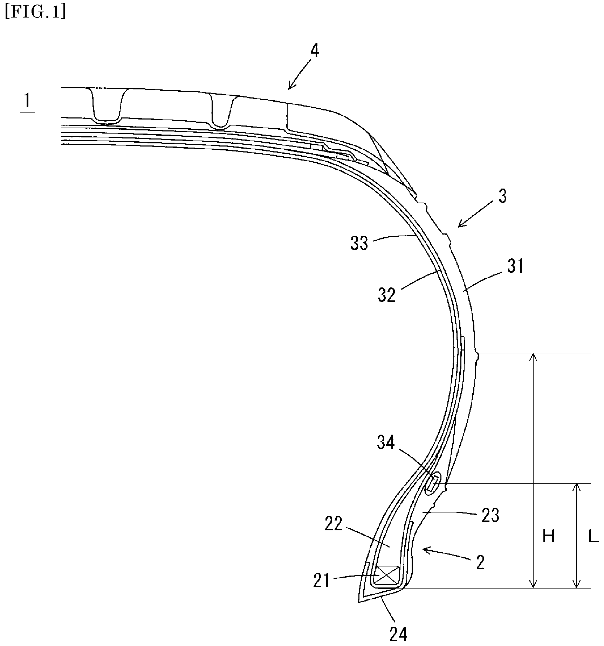

Tire according to the present embodiment, an electronic component is provided between bead and clinch member (hereinafter, also referred to as "clinch") located outward of the carcass. FIG.1 is a cross sectional view showing configuration of a tire according to this embodiment. In FIG.1, 1 is a tire, 2 is a bead portion, 3 is a sidewall portion, and 4 is a tread. Further, 21 is a bead core, 22 is a bead apex, and 23 is a clinch. Note that, the clinch is an external member located inner side than the sidewall in the tire radial direction and located outer side than the bead reinforcing layer in the tire axial direction. Also, 24 is a chafer, 31 is a sidewall, 32 is a carcass, and 33 is an inner liner. Further, 34 is an electronic component. In FIG.1, H is the distance from the position of the maximum tire width to the bottom of bead core, and L is the distance from the bottom of bead core of the electronic component 34.

(2) Clinch

In the present embodiment, the clinch 23 constituting the bead portion 2 is the rubber member having the largest E*(100°C) among the rubber members disposed outer side of the electronic component 34 in the tire axial direction. And E*(100°C) at 100°C and E*(150°C) at 150 °C of the clinch 23 satisfy the following formula.

$$E^*(150°C) / E^*(50°C) \geqq 0.9$$

There is no need to set the upper limit of the above formula in order to exert the effects of the present invention, but in view of easiness of manufacturing a tire, 1.5 or less is preferable, and 1.4 or less is more preferable.
In the present application, E* means an absolute value. Incidentally, E*(100°C) of the rubber composition for a clinch is, for example, 5 - 45 MPa, and E*(150°C) is, for example, 2.5 - 30 MPa.
And, when using the rubber composition for clinch of E*(100°C) within the range exemplified above, the clinch having E*(150°C) which satisfies the above formula is used. Similarly, when using a rubber composition for clinch of E*(150°C) within the range exemplified above, the clinch having E*(100°C) which satisfies the above formula is used.
Even if the internal temperature of the tire rises to 150°C by conducting a severe handling at a high speed, occurrence of damage and deformation of electrical component can be sufficiently suppressed and the reading performance of the electronic component can be maintained, by suppressing the E* so as not to change more than 10%, as shown in the above formula. The above formula also includes the case where E*(150°C) is higher than E*(100°C).
In this case, E* in the above is the value measured under the conditions shown below using a viscoelastic spectrometer (for example, "VESF-3" manufactured by Iwamoto Seisakusho Ltd.) in accordance with the prescription of "JIS K 6394".

| | |
|---|---|
| Initial strain: | 10% |
| Amplitude: | $\pm 2.0\%$ |
| Frequency: | 10Hz |
| Deformation mode: | tensile |
| Measurement temperature: | 100°C and 150°C |

(3) Electronic Component

In the present embodiment, specific examples of the electronic components include RFID, pressure sensor, temperature sensor, acceleration sensor, magnetic sensor, groove depth sensor and the like. Among them, RFID is particularly preferable because a RFID can read and store large volume of information without contact and can store manufacturing information of the tire, management information customer information and the like, in addition to data such as pressure, temperature and the like.
And the specific position where the electronic component 34 is provided is not particularly limited as far as it is a place where reliable information communication is possible and the electronic component is hardly damaged by the deformation of the tire. As a position where the damage of the electronic component by the deformation of the tire is relatively small and communication from the outside can be made without problems when assembled in the rim, for example, a position between the bead portion and the clinch, between the bead portion and the sidewall, between the bead reinforcing layer and the clinch, between the bead reinforcing layer and the sidewall, or the like can be mentioned. In the tire cross-sectional view, it is preferable to be provided at a position outer side of the end of carcass in tire axial direction where the height from the bottom of bead core (L in FIG. 1) is 20 to 80% with respect to the distance from the position of the maximum tire width to the bottom of bead core (H in FIG. 1) in the equatorial direction.
The longitudinal size (overall length including the IC chip and the antenna) of the electronic component provided in a tire in the present embodiment is preferably 18 cm or less, more preferably 9 cm or less, further more preferably 4 cm or less, and most preferably 2 cm or less.
In such a small size, there is a risk of causing damage and deformation of the electronic component due to a decrease in rigidity caused by rise of the internal temperature of the tire due to high-speed and severe handling. However, as described above, since the rubber member that suppresses the decrease in rigidity is disposed outward in the tire axial direction, even if the internal temperature of the tire rises, the electronic component is not damaged or deformed and the reading performance of the electronic component can be maintained. At this time, bending of the antenna portion can be kept to a minimum by arranging the antenna portion of the electronic component so as to extend in an orthogonal direction to the carcass cord.

(4) Rubber composition for Clinch

In this embodiment, the rubber composition used in the manufacture of clinch can be obtained by kneading and mixing a rubber component which is the main component and various compounding materials such as a heat resistance improving agent, a reinforcing material, an anti-aging agent, an additive, and the like.

(a) Formulation

(i) Rubber component

As the rubber component, for example, diene rubbers such as natural rubber (NR), isoprene rubber (IR), butadiene rubber (BR), styrene butadiene rubber (SBR), acrylonitrile butadiene rubber (NBR), chloroprene rubber (CR), butyl rubber (IIR), and the like can be mentioned. Among them, isoprene-based rubbers (NR and IR) are preferable from the viewpoint that steering stability, low fuel consumption and extrusion processability can be favorably improved.

Content of the isoprene-based rubber (NR or IR) is preferably 20 parts by mass or more, and more preferably 30 parts by mass or more in 100 parts by mass of the rubber component. Moreover, it is preferably 60 parts by mass or less, and more preferably 50 parts by mass or less. By setting the content of isoprene-based rubber (NR or IR) as described above, it is possible to sufficiently secure a balance between extensibility that secures durability and low heat generation.

Content of BR is preferably 40 parts by mass or more, more preferably 50 parts by mass or more in 100 parts by mass of the rubber component. Moreover, it is preferably 80 parts by mass or less, and more preferably 70 parts by mass or less. By setting the content of BR in the rubber component within the above range, sufficient bending crack growth resistance and sufficient breaking strength can be secured.

The BR is not particularly limited. For example, BR of high cis content, BR containing a syndiotactic polybutadiene crystal (SPB-containing BR), and modified BR can be used. Among these, SPB-containing BR is preferable from the viewpoint that it greatly improves the extrusion processability by the intrinsic orientation crystal components.

(ii) Carbon black

It is preferable that carbon black is compounded as a reinforcing material in the rubber composition of the present embodiment. Examples of carbon black include GPF, HAF, ISAF, SAF, FF, FEF and the like. One of these carbon blacks may be used alone, or two or more thereof may be used in combination. Among these, hard carbon-based ISAF, SAF and HAF are preferable from the viewpoint of securing the hardness, and among them, HAF is particularly preferable.

As content of carbon black, 50 parts by mass or more is preferable and 60 parts by mass is more preferable with respect to 100 parts by mass of rubber components. Moreover, 90 parts by mass or less is preferable, and 80 parts by mass or less is more preferable. By setting the content of carbon black in the rubber composition within the above range, sufficient fracture characteristic can be obtained and excessive rise in E* can be suppressed.

(iii) Heat resistance improving agent

The rubber composition of the present embodiment preferably contains a heat resistance improving agent as a material to suppress the change in E* at high temperatures described above.

Examples of the heat resistance improving agent include acrylates or methacrylates having two or more ester groups bonded to carbon atoms. Specifically, the examples include 1,3-butylene glycol diacrylate, 1,5- pentanediol diacrylate, neopentyl glycol diacrylate, 1,6-hexanediol diacrylate, diethylene glycol diacrylate, triethylene glycol diacrylate, tetraethylene glycol diacrylate, polyethylene glycol diacrylate, polypropylene glycol diacrylate, bis (4-acryloxy) polyethoxy phenylpropane oligo ester diacrylate, pentaerythritol triacrylate (PETA), trimethylolpropane triacrylate (TMPTA), tetramethylol methane tetraacrylate (TMMTA), dipentaerythritol penta/hexa acrylate (DPHA), oligoester polyacrylate, dipropylene glycol dimethacrylate, trimethylol ethane trimethacrylate, trimethylol propane trimethacrylate, di(tetramethylol methane)pentamethacrylate , di(tetramethylolmethane) trimethacrylate, and the like. Among them di(tetramethylolmethane)pentamethacrylate, di(tetramethylolmethane) trimethacrylate and trimethylolpropane trimethacrylate are particularly preferable. These compounds may be used alone or in combination of two or more.

Content of the heat resistance improving agent is preferably 0.5 part by mass or more and more preferably 2 parts by mass or more with respect to 100 parts by mass of the rubber component. Moreover, it is preferably 20 parts by mass or less, and more preferably is 7 parts by mass or less. If the content is too small, heat resistance improving effect cannot be obtained sufficiently, and if the content is too large, the effect is saturated.

The heat resistance improving agent is preferable because, when the temperature of the tire rises to such a temperature that the deterioration of the rubber starts, the polymer is re-crosslinked, thereby E* can be raised conversely.

(iv) Vulcanizing agent and Vulcanization accelerator

Sulfur is used as a vulcanizing agent, and content thereof is preferably 1 part by mass or more, and more preferably 2 parts by mass or more with respect to 100 parts by mass of the rubber component. Moreover, it is preferably 8 parts by mass or less, and more preferably 6 parts by mass or less. By setting the content of sulfur within the above range, sufficient steering stability can be secured, the bloom and adhesion of sulfur can be suppressed, and the durability can be secured. Content of sulfur is pure sulfur content. When using insoluble sulfur, it is content except oil content.

Sulfur is usually used together with a vulcanization accelerator. Content of the vulcanization accelerator is preferably 0.5 part by mass or more and more preferably 1.5 parts by mass or more with respect to 100 parts by mass of the rubber component. Moreover, it is preferably 5 parts by mass or less, and more preferably 4 parts by mass or less. By setting the content of the vulcanization accelerator within the above range, the effects of the present invention tend to be favorably obtained. Specific examples of the vulcanization accelerator include sulfenamide type, thiazole type, thiuram type, thiourea type, guanidine type, dithiocarbamic acid type, aldehyde-amine type or aldehyde-ammonia type, imidazoline type, xanthate type vulcanization accelerators, and the like. These vulcanization accelerators may be used alone or in combination of two or more. Among them, sulfenamide type vulcanization accelerators are preferable, because the scorch time and the vulcanization time can be balanced.

Furthermore, when a vulcanization accelerator is used in combination with hexamethylenetetramine (HMT), hexamethoxymethylol melamine (HMMM), hexamethoxymethylol pentamethyl ether (HMMPME), melamine, methylol melamine, and the like, it acts on the heat resistance improving agent in the same manner as a curing agent act on a curable resin such as a phenolic resin, and the effect of the heat resistance improving agent can be exhibited more sufficiently, therefore, preferable.

(v) Stearic acid

As stearic acid, conventionally known products can be used. For example, products manufactured by NOF Corporation, Kao Corporation, Wako Pure Chemical Industries, Ltd., Chiba Fatty Acid Corporation, etc. can be used. When stearic acid is used, content of stearic acid is preferably 0.5 part by mass or more, and more preferably 1 part by mass or more with respect to 100 parts by mass of the rubber component. Moreover, it is preferably 10 parts by mass or less, and more preferably 5 parts by mass or less. By setting the content of stearic acid within the above range, the effects of the present invention tend to be obtained favorably.

(vi) Zinc oxide

As zinc oxide, conventionally known ones can be used. For example, products manufactured by Mitsui Mining & Smelting Co., Ltd., Toho Zinc Co., Ltd., Hakusui Tech Co., Ltd., Shodo Chemical Industry Co., Ltd., Sakai Chemical Industry Co., Ltd., etc. can be used. When using zinc oxide, content of zinc oxide is preferably 0.5 part by mass or more, and more preferably 1 part by mass or more with respect to 100 parts by mass of the rubber component. Moreover, it is preferably 10 parts by mass or less, and more preferably 5 parts by mass or less. By setting the content of zinc oxide within the above range, the effects of the present invention tend to be obtained favorably.

(vii) Anti-aging agent

As an anti-aging agent, an amine-type anti-aging agent having excellent ozone resistance effect is suitable. The amine-type anti-aging agent is not particularly limited, and examples thereof include amine derivatives such as diphenylamine-type, p-phenylenediamine-type, naphthylamine-type and ketone amine condensate-type ones. These may be used alone, or two or more may be used in combination. Examples of diphenylamine type derivatives include p-(p-toluenesulfonylamide) -diphenylamine, octylated diphenylamine, 4,4'-bis ($\alpha$, $\alpha$'-dimethylbenzyl) diphenylamine and the like. Examples of p-phenylenediamine type derivatives include N-(1,3-dimethylbutyl) -N'-phenyl-p-phenylenediamine (6PPD), N-phenyl-N'-isopropyl-p-phenylenediamine (IPPD) and N, N'-di-2-naphthyl-p-phenylenediamine and the like. Examples of the naphthylamine type derivatives include phenyl-$\alpha$-naphthylamine and the like. Among them, phenylenediamine type and ketone amine condensate type are preferable. Content of the anti-aging agent is preferably 0.3 part by mass or more and more preferably 1 part by mass or more with respect to 100 parts by mass of the rubber component. Moreover, it is preferably 8 parts by mass or less, and more preferably 4 parts by mass or less.

(viii) Oil

Example of oils include process oils, vegetable oils and fats, and mixtures thereof. As the process oil, for example, paraffin-based process oil, aroma-based process oil, naphthene-based process oil and the like can be used. As vegetable fats and oils, castor oil, cottonseed oil, linseed oil, rapeseed oil, soybean oil, palm oil, coconut oil, peanut oil, rosin, pine oil, pine tar, tall oil, corn oil, rice oil, beni flower oil, sesame oil, olive oil, sunflower oil, palm kernel oil, camellia oil, jojoba oil, macadamia nut oil, tung oil and the like can be mentioned. These may be used alone or in combination of two or more. Specific examples of the oil which can be used include products manufactured by Idemitsu Kosan Co., Ltd., Sankyo Yuka Kogyo Co., Ltd., Japan Energy Co., Ltd., Orisoi Company, H & R Company, Toyokuni Oil Co., Ltd., Showa Shell Co., Ltd., Fuji Kosan Co., Ltd., etc. Content of the oil is preferably 0.5 part by mass or more and more preferably 1 part by mass or more with respect to 100 parts by mass of the rubber component. Moreover, it is preferably 10 parts by mass or less and more preferably 5 parts by mass or less.

(ix) Others

In addition to the above components, the rubber composition of the present embodiment may also contain compounding materials conventionally used in the rubber industry. For example, inorganic fillers such as silica, talc and calcium carbonate, silane coupling agents, organic fillers such as cellulose fibers, softeners such as liquid rubber and adhesive resins, vulcanizing agents other than sulfur, organic crosslinking agents and the like may be compounded as needed. About the compounding quantity of each compounding material, it can be selected suitably.

As described above, the clinch is preferably adjusted so that E* satisfies a predetermined relational expression, as the rubber member for tire having the largest E*(100°C) at 100°C among tire rubber members located inward in the tire axial direction from the position where the electronic component is provided. As a method for adjusting the E* of the clinch, adjustment by increasing or decreasing the amount of the heat resistance improving agent can be mentioned. As shown in the examples described later, E* can be increased by increasing the heat resistance improving agent. E* can also be adjusted by increasing or decreasing the amount of carbon black or sulfur. As shown in later-described examples, E* can be increased by increasing the amount of carbon black or sulfur. However, when the amount of carbon black is increased, the heat generation property increases, and when the amount of sulfur is increased, the heat generation property decreases. Therefore, it is preferable to adopt a method in which use of the heat resistance improving agent and use amount of it are determined first, then the amount of sulfur is adjusted, thereafter the amount of carbon black is adjusted finally. Thereby, the aimed E* can be achieved without need for excessive trial and error.

(b) Manufacturing method of Rubber composition

The rubber composition for clinch can be manufactured by a known method, for example, by a method of kneading the above-mentioned components using a rubber kneading apparatus such as an open roll or a banbury mixer.

2. Manufacture of Tire

The tire according to the present embodiment can be manufactured by a conventional method except that an electronic component is provided in a rubber member during molding. That is, the rubber composition is molded by extrusion processing in accordance with the shape of the clinch at the unvulcanized stage, pasted together with other tire members on a tire molding machine according to a usual method, and an unvulcanized tire is formed. In the middle of molding, an electronic component is embedded at a predetermined position between the bead reinforcing layer and the clinch.

Thereafter, a tire is manufactured by heating and pressing the unvulcanized tire in which an electronic component is provided in a vulcanizer.

In the above, the clinch 23 is described as a tire rubber member having the largest E*(100°C), but it can be considered as well the case where the sidewall 31 is a tire rubber member having the largest E*(100 °C).

EXAMPLES

Hereinafter, the present invention will be described more specifically with reference to examples. The following examples are performed as the clinch is a rubber member for tires having the largest E*(100°C), like the above.

1. Compounding materials and Formulation

The compounding materials are shown in Table 1, and the compounding formulation is shown in Table 2.

EP 3 677 447 B1

[Table 1]

| Compounding materials | Product Name | Manufacturer |
|---|---|---|
| (Rubber component) | | |
| NR | TSR20 | |
| SBR | SBR1502 | Sumitomo Chemical Industry Co., Ltd. |
| BR | UBEPOL BR150B | Ube Industries, Ltd. |
| (Reinforcing material) | | |
| Carbon Black | N330 | Showa Cabot Co. Ltd. |
| (Heat resistance improving agent) | | |
| DPHA | KAYARAD DPHA | Nippon Kayaku Co., Ltd. |
| (Curable resin · Curing agent) | | |
| Curable resin | PR12686 | Sumitomo Bakelite Co. Ltd. |
| Curing agent | SUNCELER HMT | Sanshin Chemical Industry Co. Ltd. |
| (Softener) | | |
| Oil | Diana Process AH-24 | Idemitsu Kosan Co. Ltd. |
| (Anti-aging agent) | | |
| Anti-aging agent | NOCLACK 6C | Ouchi Shinko Chemical Co. Ltd. |
| (Vulcanizing agent) | | |
| Sulfur | Insoluble sulfur | Tsurumi Chemical Industry Co. Ltd. |
| Vulcanization accelerator | SUNCELER NS-G | Sanshin Chemical Industry Co. Ltd. |
| (Others) | | |
| Stearic acid | Tsubaki | NOF CORPORATION |
| Zinc oxide | Zinc oxide # 1 | Mitsui Mining & Smelting Co. Ltd. |

[Table 2]

| Examples / Comparative Examples | Examples No. | | | | | | | | | | Comparative Examples No. | | |
|---|---|---|---|---|---|---|---|---|---|---|---|---|---|
| | 1 | 2 | 3 | 4 | 5 | 6 | 7 | 8 | 9 | 10 | 1 | 2 | 3 |
| NR | 40 | 40 | 40 | 40 | 40 | 40 | 40 | 40 | 40 | 40 | 70 | 70 | 70 |
| SBR | - | - | - | - | - | - | - | - | - | - | 30 | 30 | 30 |
| BR | 60 | 60 | 60 | 60 | 60 | 60 | 60 | 60 | 60 | 60 | - | - | - |
| Carbon Black | 65 | 70 | 70 | 70 | 70 | 60 | 60 | 60 | 60 | 60 | 60 | 70 | 60 |
| Heat resistance improving agent | - | - | 3 | 6 | 9 | 3 | 6 | 9 | 9 | 9 | - | - | - |
| Curable resin | - | - | - | - | - | - | - | - | - | - | 5 | 5 | 10 |
| Oil | 5 | 10 | 10 | 10 | 10 | 10 | 10 | 10 | 10 | 10 | 5 | 10 | 5 |
| Anti-aging agent | 3 | 3 | 3 | 3 | 3 | 3 | 3 | 3 | 3 | 3 | - | - | - |
| Stearic acid | 3 | 3 | 3 | 3 | 3 | 3 | 3 | 3 | 3 | 3 | 2 | 2 | 2 |
| Zinc oxide | 2 | 2 | 2 | 2 | 2 | 2 | 2 | 2 | 2 | 2 | 3 | 3 | 3 |
| Sulfur | 2.5 | 2.5 | 2.5 | 2.5 | 2.5 | 2.5 | 2.5 | 2.5 | 3.5 | 6.0 | 2.5 | 2.5 | 2.5 |

(continued)

| Examples / Comparative Examples | Examples No. | | | | | | | | | | Comparative Examples No. | | |
|---|---|---|---|---|---|---|---|---|---|---|---|---|---|
| | 1 | 2 | 3 | 4 | 5 | 6 | 7 | 8 | 9 | 10 | 1 | 2 | 3 |
| Vulcanization accelerator | 3.0 | 3.0 | 3.0 | 3.0 | 3.0 | 3.0 | 3.0 | 3.0 | 4.0 | 4.0 | 2.0 | 2.0 | 2.5 |
| Curing agent | - | - | - | - | - | - | - | - | - | - | 0.5 | 0.5 | 1.0 |

2. Preparation of Pneumatic tire

Based on the formulations in Table 1 and Table 2, using a banbury mixer manufactured by Kobe Steel, Ltd., compounding materials other than sulfur and a vulcanization accelerator are kneaded. And then, to the kneaded product thus obtained, sulfur and vulcanization accelerator are added and kneaded by using an open roll to obtain an unvulcanized rubber composition for clinch. Further, a rubber composition for coating the electronic component 34 can be obtained on the basis of Example 1 in JP2013-245339 A.

Then, the unvulcanized rubber composition thus obtained is formed into the shape of a clinch, and pasted together by laminating with other tire components in a tire molding machine. Electronic component 34 coated with an unvulcanized rubber composition is disposed in the clinch at a position 46% from the bottom of the bead core, and vulcanization is conducted under the conditions of 150°C for 30 minutes, thereby a test tire (tire size: 195 / 65R15) can be obtained. As the electronic component 34, RFID in which a 30 mm antenna is provided on both sides of a 3 mm $\times$ 3 mm $\times$ 0.4 mm IC chip can be used.

The physical properties (E*) of each formulation shown in Table 2 are measured according to the following method.

That is, a rubber sample is extracted from the bead apex of each pneumatic tire, and E* is measured under the following conditions using a viscoelastic spectrometer ("VESF-3" manufactured by Iwamoto Seisakusho).

| | |
|---|---|
| Initial strain: | 10% |
| Amplitude: | $\pm$ 2.0% |
| Frequency: | 10Hz |
| Deformation mode: | tensile |
| Measurement temperature: | 100°C and 150°C |

The relationship between the physical properties of the clinch, the durability of the tire and the communication properties of the electronic components are shown in Table 3.

For the evaluation of the durability of above tire, is conducted a test to run around the circuit 5 laps at a high speed driving with raising the speed until reaching the limit grip. If 5 laps run is possible, evaluates as "Y"(acceptable) and if not possible, evaluates as "NG"(not acceptable). Regarding the driving conditions, the mounting rim is 15 $\times$ 6.0J, the tire inner pressure is 190 kPa, and the test vehicle is a front wheel drive vehicle, the displacement is 2000 cc, and the tire mounting position is all wheels.

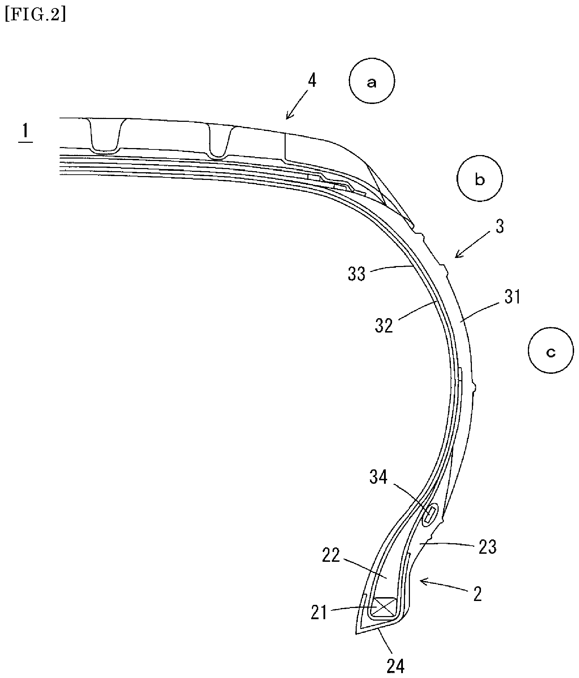

As the evaluation method of communication performance, transceivers for the electronic component are installed at three measurement points (a to c) of the circle shown in FIG. 2 and it is judged whether communication of data with the electronic component is possible.

Specifically, the tire is assembled in a rim and mounted in a vehicle for conducting the measurement, and the ratio of (the number of readable positions after the durability evaluation / the number of readable positions before the durability evaluation) is calculated. The evaluation result is "EX"(excellent), if the average value of the four tire is 60% or more; "G"(good), if 50% or more and less than 60%; "Y" (acceptable), if more than 0% and less than 50%; and "NG"(not acceptable), if 0% or readable position before durability evaluation is 0.

[Table 3]

| | | Examples No. | | | | | | | | | | Comparative Examples No. | | |
|---|---|---|---|---|---|---|---|---|---|---|---|---|---|---|
| | | 1 | 2 | 3 | 4 | 5 | 6 | 7 | 8 | 9 | 10 | 1 | 2 | 3 |
| Physical properties | A: E*(100°C) | 10.7 | 10.8 | 11.2 | 11.8 | 12.1 | 8.2 | 9.0 | 9.2 | 9.8 | 10.8 | 21.8 | 27.6 | 45.1 |
| | B: E*(150°C) | 9.6 | 10.5 | 11.9 | 15.6 | 16.1 | 8.5 | 11.6 | 12.0 | 13.7 | 16.2 | 18.5 | 20.1 | 23.3 |
| | B/A | 0.90 | 0.97 | 1.06 | 1.32 | 1.33 | 1.04 | 1.29 | 1.30 | 1.40 | 1.50 | 0.85 | 0.73 | 0.52 |
| Evaluation | Tire durability | Y | Y | Y | Y | Y | Y | Y | Y | Y | Y | Y | NG | NG |
| | Electronic component communication | Y | Y | G | EX | EX | G | G | G | EX | EX | NG | — | — |

Although the present invention has been described based on the embodiments, the present invention is not limited to the above embodiments. Various modifications can be made to the above embodiments within the scope defined by the appended claims.

**DESCRIPTION OF THE REFERRENCE NUMERALS**

1    tire
2    bead portion
3    sidewall portion
4    tread
21    bead core
22    bead apex
23    clinch
24    chafer
31    sidewall
32    carcass
33    inner liner
34    electronic component
H    Distance from the position of maximum tire width to the bottom of the bead core
L    Distance from the bottom of the bead core of electronic component

**Claims**

1. A pneumatic tire (1) having an electronic component (34) provided at a position outwards of the carcass (32) in the tire axial direction,

   wherein E*(100°C) at 100°C and E*(150°C) at 150°C of the rubber member (23) for a tire having the largest E*(100°C) at 100°C, among the rubber members for tire located outward in the tire axial direction relative to the position where the electronic components (34) is provided, satisfy the following formula:

$$E^*(150°C) / E^*(100°C) \geqq 0.9$$

wherein the values E* are measured using a viscoelastic spectrometer in accordance with the prescription of "JIS K 6394", under an initial strain of 10%, at an amplitude of ±2.0% and a frequency of 10Hz in tensile deformation mode.

2. The pneumatic tire according to claim 1, wherein E*(100°C) at 100°C and E*(150°C) at 150°C satisfy the following formula.

$$E^*(150°C) / E^*(100°C) \geqq 1.0$$

3. The pneumatic tire according to claim 2, wherein E*(100°C) at 100°C and E*(150°C) at 150°C satisfy the following formula.

$$E^*(150 °C) / E^*(100 °C) \geqq 1.3$$

4. The pneumatic tire according to any one of claims 1 to 3, wherein E*(100°C) at 100°C and E*(150°C) at 150°C satisfy the following formula.

$$E^*(150°C) / E^*(100°C) \leqq 1.5$$

5. The pneumatic tire according to claim 4, wherein E*(100°C) at 100°C and E*(150°C) at 150°C satisfy the following formula.

$$E^*(150°C) / E^*(100°C) \leqq 1.4$$

6. The pneumatic tire according to any one of claims 1 to 5, wherein the electronic component (34) is disposed outwards of the carcass (32) in the tire axial direction in the cross-sectional view, and embedded at a position of 20 to 80% from the bottom of bead core (21) with respect to the distance (H) from the position of maximum tire width to the bottom of bead core (21) in the equatorial direction.

7. The pneumatic tire according to any one of claims 1-6 wherein the electronic component (34) is a transponder for RFID.

**Patentansprüche**

1. Luftreifen (1) mit einer elektronischen Komponente (34), die an einer Position außen von der Karkasse (32) in der axialen Richtung des Reifens vorgesehen ist,

   wobei E*(100°C) bei 100°C und E*(150°C) bei 150°C des Kautschukelements (23) für einen Reifen mit dem größten E*(100°C) bei 100°C unter den Kautschukelementen für einen Reifen, die in der axialen Richtung des Reifens relativ zu der Position, an der die elektronischen Komponente (34) vorgesehen ist, nach außen hin angeordnet sind, die folgende Formel erfüllen:

$$E^*(150°C) / E^*(100°C) \geqq 0,9$$

   wobei die Werte von E* unter Verwendung eines Viskoelastizitätsspektrometers nach den Vorschriften von "JIS K 6394" unter einer anfänglichen Dehnung von 10 %, mit einer Amplitude von ± 2,0 % und einer Frequenz von 10 Hz im Zugverformungsmodus gemessen sind.

2. Luftreifen nach Anspruch 1,

wobei E*(100°C) bei 100°C und E*(150°C) bei 150°C die folgende Formel erfüllen.

$$E^*(150°C) / E^*(100°C) \geqq 1,0$$

3. Luftreifen nach Anspruch 2,
wobei E*(100°C) bei 100°C und E*(150°C) bei 150°C die folgende Formel erfüllen.

$$E^*(150°C) / E^*(100°C) \geqq 1,3$$

4. Luftreifen nach einem der Ansprüche 1 bis 3,
wobei E*(100°C) bei 100°C und E*(150°C) bei 150°C die folgende Formel erfüllen.

$$E^*(150°C) / E^*(100°C) \leqq 1,5$$

5. Luftreifen nach Anspruch 4,
wobei E*(100°C) bei 100°C und E*(150°C) bei 150°C die folgende Formel erfüllen.

$$E^*(150°) / E^*(100°) \leqq 1,4$$

6. Luftreifen nach einem der Ansprüche 1 bis 5,
wobei die elektronische Komponente (34) außen von der Karkasse (32) in der axialen Richtung des Reifens in der Querschnittsansicht angeordnet und an einer Position von 20 bis 80 % von der Unterseite des Wulstkerns (21) in Bezug auf den Abstand (H) von der Position der maximalen Reifenbreite zur Unterseite des Wulstkerns (21) in der Äquatorialrichtung eingebettet ist.

7. Luftreifen nach einem der Ansprüche 1-6,
wobei die elektronische Komponente (34) ein Transponder für RFID ist.

**Revendications**

1. Bandage pneumatique (1) ayant un composant électronique (34) prévu à une position à l'extérieur de la carcasse (32) dans la direction axiale du pneumatique,

dans lequel E*(100 °C) à 100 °C et E*(150 °C) à 150 °C de l'élément en caoutchouc (23) pour un pneumatique ayant le plus grand E*(100 °C) à 100 °C, parmi les éléments en caoutchouc pour un pneumatique situé à l'extérieur dans la direction axiale du pneumatique relativement à la position dans laquelle le composant électronique (34) est prévu, satisfont la formule suivante :

$$E^*(150 °C) / E^*(100 °C) \geq 0,9,$$

dans laquelle les valeurs E* sont mesurées en utilisant un spectromètre de viscoélasticité en accord avec la prescription de la norme industrielle japonaise « JIS K 6394 », sous une contrainte initiale de 10 %, à une amplitude de ± 2,0 % et une fréquence de 10 Hz dans un mode de déformation en traction.

2. Bandage pneumatique selon la revendication 1, dans lequel E*(100 °C) à 100 °C et E*(150 °C) à 150 °C satisfont la formule suivante :

$$E^*(150 °C) / E^*(100 °C) \geq 1,0.$$

3. Bandage pneumatique selon la revendication 2, dans lequel E*(100 °C) à 100 °C et E*(150 °C) à 150 °C satisfont la formule suivante :

$$E^*(150\ °C) / E^*(100\ °C) \geq 1{,}3.$$

4. Bandage pneumatique selon l'une quelconque des revendications 1 à 3, dans lequel E*(100 °C) à 100 °C et E*(150 °C) à 150 °C satisfont la formule suivante :

$$E^*(150\ °C) / E^*(100\ °C) \leq 1{,}5.$$

5. Bandage pneumatique selon la revendication 4, dans lequel E*(100 °C) à 100 °C et E*(150 °C) à 150 °C satisfont la formule suivante :

$$E^*(150\ °C) / E^*(100\ °C) \leq 1{,}4.$$

6. Bandage pneumatique selon l'une quelconque des revendications 1 à 5, dans lequel le composant électronique (34) est disposé à l'extérieur de la carcasse (32) dans la direction axiale du pneumatique dans la vue de section transversale, et est encastré à une position de 20 à 80 % depuis le fond d'âme de talon (21) par rapport à la distance (H) depuis la position de la largeur maximum du pneumatique jusqu'au fond d'âme de talon (21) dans la direction de l'équateur.

7. Bandage pneumatique selon l'une quelconque des revendications 1 à 6, dans lequel le composant électronique (34) est un transpondeur pour RFID.

[FIG.1]

[FIG.2]

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006168473 A
- JP 2008265750 A
- WO 2016021327 A1
- JP 2016539047 A
- JP 2013245339 A